# EUROPÄISCHE PATENTSCHRIFT

(11) **EP 0 723 911 B1**
(45) Veröffentlichungstag und Bekanntmachung des Hinweises auf die Patenterteilung: **29.03.2000**
(21) Anmeldenummer: 95119276.4
(22) Anmeldetag: 07.12.1995
(51) Int. Cl.: B64D 11/00, B60Q 3/02

(54) **Anordnung zum Versorgen von Passagieren in einer Passagierkabine, insbesondere in einem Flugzeug**
Passenger service unit for a passenger compartment, specially for an aircraft
Unité de service pour passager dans une cabine de passagers, spéciallement un avion

(30) Priorität: 28.01.1995 DE 19502658
(43) Veröffentlichungstag der Anmeldung: 31.07.1996
(73) Patentinhaber: DaimlerChrysler Aerospace Airbus Gesellschaft mit beschränkter Haftung, 21129 Hamburg (DE)
(72) Erfinder: Schumacher, Markus, D-21614 Buxtehude (DE)
(74) Vertreter: Hansmann, Dierk, Dipl.-Ing.

(56) Entgegenhaltungen:
- DE-A- 4 025 862
- DE-C- 4 301 681
- FR-A- 2 682 652
- US-A- 5 108 048
- US-A- 5 347 434

## Beschreibung

Die Erfindung betrifft eine Passagierkabine mit einer Anordnung zum Versorgen von Passagieren, insbesondere in einem Flugzeug, eine Versorgungseinheit mit Komfort- und Bedienelementen aufweisend, wie Leseleuchte, Stewardruftaste, Lautsprecher, Luftdüse, Sauerstoffmaske und -generator und optische Anzeigeelemente, und Zuführleitungen zwischen einer Versorgungsleitung und der Versorgungseinheit, wobei die Versorgungseinheit unterhalb einer Gepäckablage angeordnet ist.

Aus DE 43 01 681 C1 ist bekannt, daß sich in der Kabine eines Passagierflugzeuges derartige Versorgungseinheiten unterhalb der im oberen Kabinenbereich angeordneten Gepäckablagen befinden. In zunehmendem Maße werden solche Gepäckablagen mit einer absenkbaren Schale ausgestattet. Mit einer derartigen Gepäckablage wird einerseits erreicht, daß in geschlossener Stellung die Bewegungsfreiheit der Passagiere nicht eingeschränkt wird und andererseits in offener Beladestellung das Ablegen und Entnehmen von Gepäck bequem möglich ist. Bei einer solchen Gepäckablage ist es aber nicht möglich, die Versorgungseinheiten unterhalb der Gepäckablagen anzuordnen. Die Versorgungseinheiten werden deshalb nach bekannter Art in Richtung Fenster verlegt, wo sie aber für die gangseitigen Passagiere schlecht erreichbar sind.

Demgemäß liegt der Erfindung die Aufgabe zugrunde, eine gattungsgemäße Passagierkabine derart auszubilden, daß eine Lage der Versorgungseinheit unterhalb von absenkbaren Gepäckablagen gewährleistet ist, die jederzeit ein bequemes Erreichen der Bedien- und Komfortelemente der Versorgungseinheit innerhalb des Zugriffsbereiches der Passagiere ermöglicht, ohne das Absenken der Gepäckablage zu behindern.

Diese Aufgabe ist bei einer gattungsgemäßen Passagierkabine dadurch gelöst, daß die Versorgungseinheit und die Zuführleitungen an einem nachgiebigen, rückfederbaren Tragarm angeordnet sind, der Tragarm an der Kabinenwand bzw. Rumpfstruktur des Flugzeuges angebracht ist und unterhalb der Gepäckablagen in Richtung Kabinenmitte verläuft, so daß die Versorgungseinheit im Zentralbereich oberhalb der zugeordneten Passagiersitze positioniert ist.

Mittels des Tragarmes kann die Versorgungseinheit an einer gewünschten Positionen oberhalb einer Sitzreihe gehalten werden und ist auch bei abgesenkter Gepäckablage voll funktionsfähig.

Weiterbildungen und zweckmäßige Ausgestaltungen ergeben sich aus den Ansprüchen 2 - 13.

Mit der Ausgestaltung gemäß Anspruch 5, 6 bzw. 7 ergibt sich der Vorteil, daß für den Passagier die einzelnen Bauteile nicht mehr sichtbar sind und gleichzeitig vor Zerstörung geschützt sind.

Mit der Maßnahme gemäß Anspruch 8 ist erreicht, daß die zur Versorgungseinheit gerichtete Oberfläche der Gepäckablage vor Kratzern und Beschädigungen geschützt ist.

Mit der Ausgestaltung gemäß Anspruch 10 ist eine allgemeine Kabinenbeleuchtung realisiert.

Durch die Maßnahmen der Ansprüche 11, 12 oder 13 kann eine äußerst flache Ausführung der Versorgungseinheit erreicht werden, da die sonst üblicherweise innerhalb der Versorgungseinheit angeordneten relativ dicken Elemente, wie Sauerstoffgenerator und Lichtquelle, nunmehr an einer Stelle außerhalb der Versorgungseinheit angeordnet werden. Diese vorteilhafte Ausgestaltung ermöglicht, daß der Kopfraum der Passagiere nicht unnötig eingeschränkt wird.

In der Zeichnung sind Ausführungsbeispiele der Erfindung dargestellt. Sie werden nachstehend anhand der Figuren 1 - 6 näher beschrieben.
Es zeigen
- Fig. 1: den oberen Teil einer Passagierkabine in einem Flugzeug im Querschnitt mit einer ersten Ausführungsform der Anordnung zum Versorgen von Passagieren,
- Fig. 2: eine perspektivische Darstellung der ersten Ausführungsform,
- Fig. 3: den oberen Teil einer Passagierkabine im Querschnitt mit einer zweiten Ausführungsform der Anordnung zum Versorgen von Passagieren,
- Fig. 4: eine perspektivische Darstellung der zweiten Ausführungsform,
- Fig. 5: eine perspektivische Darstellung einer dritten Ausführungsform und
- Fig. 6: eine perspektivische Darstellung einer vierten Ausführungsform.

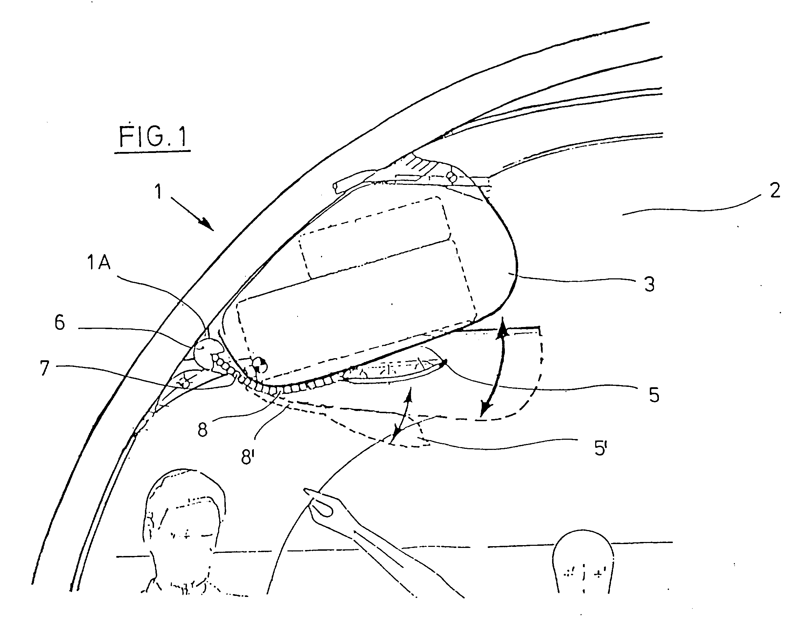

Die Fig. 1 zeigt einen Teilquerschnitt durch einen Flugzeugrumpf 1, innerhalb dessen eine Passagierkabine 2 in ihrem oberen Bereich ersichtlich ist. Eine Gepäckablage 3 ist in diesem Bereich oberhalb der sitzenden Passagiere ersichtlich. Eine Versorgungseinheit 5 ist unterhalb der als absenkbare Schale ausgebildeten Gepäckablage 3 angeordnet, wobei die Versorgungseinheit 5 eine von den Passagieren bequem erreichbare Position über den zur Versorgungseinheit 5 zugeordneten Sitzen einnimmt. Die Versorgungseinheit 5 ist im wesentlichen mit Komfort- und Bedienelementen ausgestattet, wie beispielsweise Leseleuchte, Stewardruftaste, Lautsprecher, Luftdüse, optische Anzeigeelemente und Sauerstoffmaske und -generator als Notsauerstoffsystem.

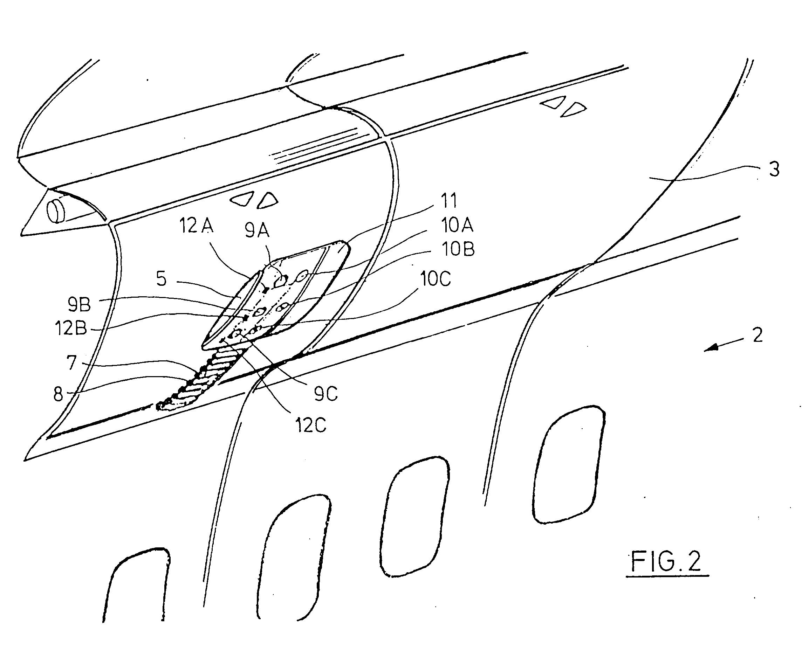

Aus der Perspektivdarstellung in Fig. 2 ist eine mögliche Anordnung von Leseleuchten 9A - 9C, von Luftduschen 10A - 10B, von Ruftasten 12A - C und von hinter einer Abdeckung 11 verborgenen Sauerstoffmasken/Sauerstoffgeneratoren ersichtlich. Wie in den Fign. 1 und 2 gezeigt, ist über Zuführleitungen 7 die Versorgungseinheit 5 an eine Versorgungsleitung 6 angeschlossen, die in Längsrichtung des Flugzeuges in der Nähe der Gepäckablagen 3 verläuft. Die Versorgungsleitung 6 enthält für alle in der Versorgungseinheit 5 zusammengefaßten Elemente die notwendigen Funktionsmittel in separaten Leitungen, wie beispielsweise eine Luftleitung für die Frischluftzufuhr der Luftdüsen und elektrische Energie- bzw. Signalübertragungsleitungen für die Leseleuchte oder den optischen Anzeigeelementen. Die jeweiligen Zuführleitungen 7 zur Versorgungseinheit 5 sind in der bevorzugten Ausgestaltung an einem federbelastetem Tragarm 8 angeordnet. Der Tragarm 8 besteht beispielsweise aus einer als Federelement wirkenden, parallel zu den Zuführleitungen verlaufenden Blattfeder, welche unter Vorspannung eingebaut wird. Die Zuführleitungen 7 sind vorzugsweise zusammen mit dem Tragarm 8 in eine schützenden Umhüllung eingebracht. Eine mögliche Umhüllung ist beispielsweise als Faltenbalg ausgebildet. Eine weitere Ausbildung der Umhüllung als ein flexibles Rohr ist möglich, das gleichzeitig als Hohlfeder wirkt und so die Vorspannung erzeugt.
Das strukturseitige Ende des Tragarmes 8 ist mit an der Versorgungsleitung 6 bzw. in deren Nähe an einem Strukturteil 1A befestigt. Am freien Ende des Tragarmes 8 ist die Versorgungseinheit 5 befestigt. Der Tragarm 8 hat eine solche Länge, daß die Versorgungseinheit 5 von den Passagieren der dazugehörigen Sitze jederzeit gut erreichbar ist. Bei einer Abwärtsbewegung der Gepäckschale 3 geben Tragarm 8 und Versorgungseinheit 5 dieser Bewegung nach und schwenken selbst nach unten in Position 5' bzw. 8'. Die Zuführleitungen 7 sind dabei in jeder Position mit der Versorgungseinheit 5 verbunden, die damit in der abgesenkten Position voll funktionsfähig bleibt und auch jederzeit in der abgesenkten Position ein bequemes Erreichen der Bedienelemente ermöglicht. Beim Hochschwenken der Gepäckschale 3 kehrt die Versorgungseinheit 5 aufgrund der Federspannung wieder in ihre Ausgangslage zurück. Ist die Versorgungseinheit 5 aufgrund ihrer Ausrichtung in Flugzeuglängsrichtung unterhalb zweier angrenzender Gepäckablagen 3 angeordnet, so gibt sie der Bewegung der sich jeweils öffnenden Gepäckablage nach.

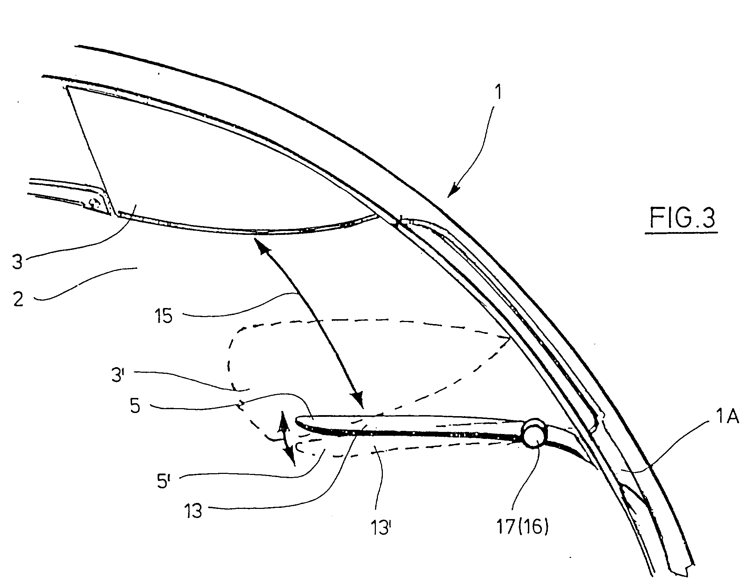

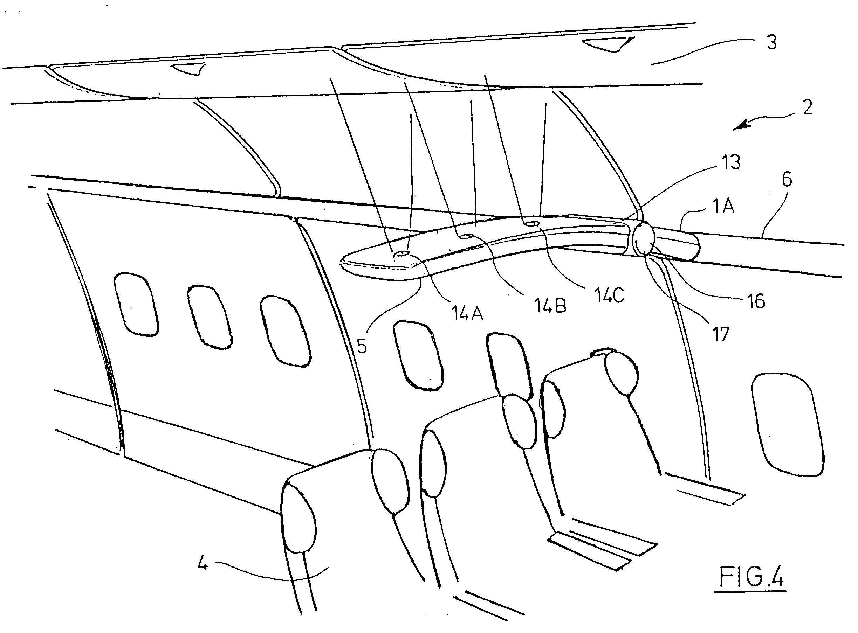

Aus Fig. 3, die ebenfalls einen oberen Teil einer Passagierkabine im Querschnitt zeigt, ist eine zweite Ausführungsform der Anordnung zum Versorgen von Passagieren zu entnehmen.
In dieser Ausführung ist die Versorgungseinheit innerhalb eines langgestreckten, in Richtung Kabinenmitte gerichteten Trägers 13 angeordnet. Die Perspektivdarstellung dieses Trägers 13 ist zum besseren Verständnis in Fig. 4 gezeigt. Der Träger 13 ist in einem bestimmten Abstand unterhalb der Gepäckablagen 3 angeordnet und beinhaltet gleichzeitig Strahler für die Kabinenbeleuchtung 14A - 14C. Die Strahler 14A - 14C sind auf dem oberen Trägerteil angeordnet und strahlen als Deckenfluter nach oben, gegen die Gepäckablage 3. Somit ist eine indirekte Beleuchtung als Deckenbeleuchtung für die Passagierkabine 2 erreicht. Neben den schon genannten Elementen für eine Sitzreihe 4 sind innerhalb des Trägers 13 auch alle Zuführleitungen angeordnet, die damit für den Passagier nicht mehr sichtbar und geschützt sind.
Um ein Absenken der Gepäckschalen zu ermöglichen, ist eine Möglichkeit des Nachgebens des Trägers 13 ebenfalls vorgesehen. Entsprechend dem Pfeil 15 ist die Gepäckablage 3 absenkbar. Die abgesenkte Position der Gepäckschale 3' ist gestrichelt dargestellt. Für die Position 3' der Gepäckschale bewegt sich der Träger 13 in die gestrichelt dargestellte Position 13'. Dafür ist ein Drehpunkt 16 für den Träger 13 in Nähe der Kabinenseitenwand vorgesehen. In einer bevorzugten Lösung ist der Drehpunkt 16 als rückfederbares Gelenk ausgebildet, an dem in einem rohrförmigen Gehäuse 17 der Sauerstoffgenerator eingebracht ist, der üblicherweise als zylinderförmige "Kerze" ausgebildet ist und sonst zusammen mit den Sauerstoffmasken innerhalb der Versorgungseinheit angeordnet ist. Mit der Verlagerung des Sauerstoffgenerators aus der Versorgungseinheit kann dieselbe äußerst flach gestaltet werden.

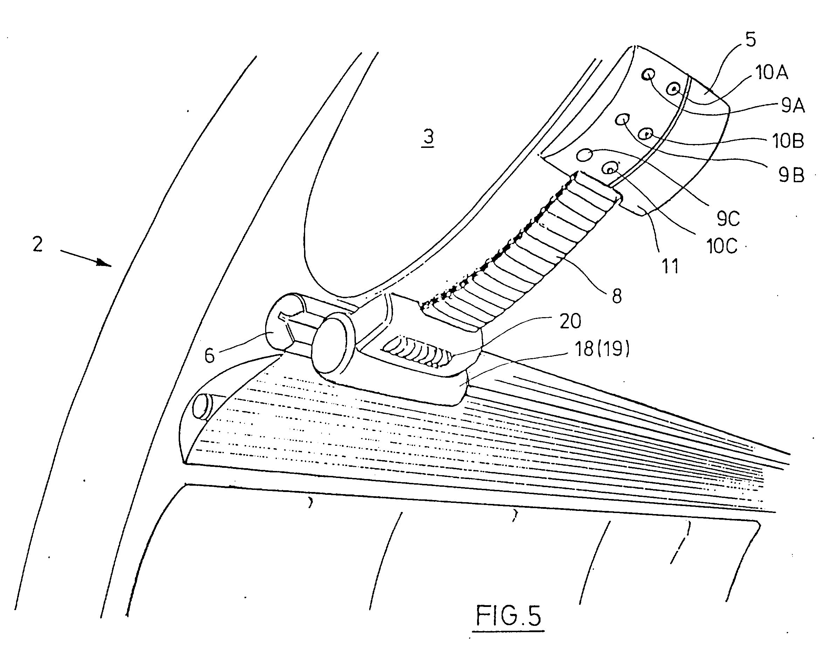

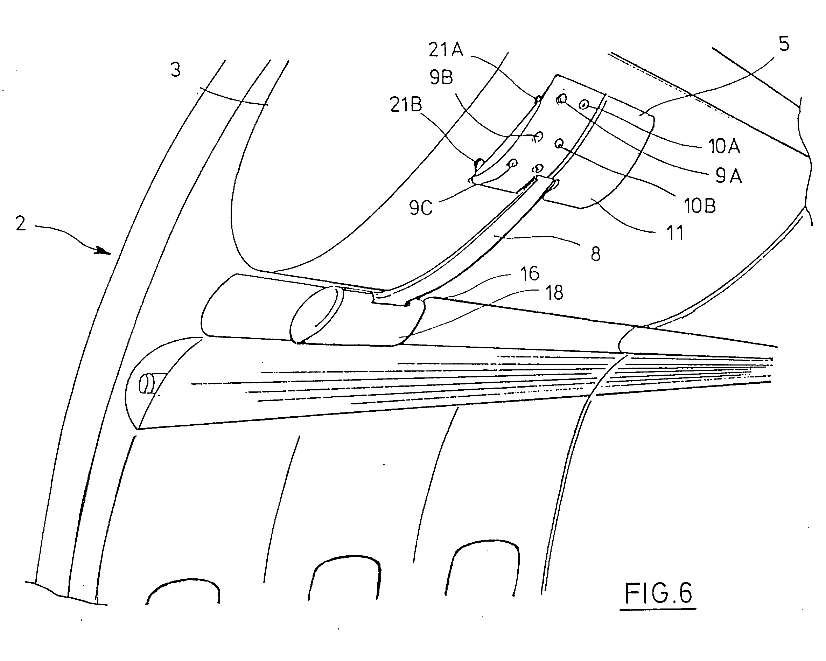

Die Fign. 5 und 6 zeigen weitere Ausgestaltungen der Anordnung zum Versorgen in einer Perspektivdarstellung. Der grundlegende Aufbau der Anordnung ist aus der Beschreibung der Fign. 1 und 2 zu entnehmen. Im Unterschied zur ersten Ausführung ist in der in Fig. 5 gezeigten dritten Ausführungsform und in Fig. 6 gezeigten vierten Ausführungsform eine möglichst flache, an die Kontur der Gepäckablage 3 angepaßte Außenform der Versorgungseinheit 5 vorgesehen, um so bei einem Absenken der Schale 3 den Kopfbereich eines Passagieres nicht einzuschränken. Um diese flache Form zu realisieren, ist das Verlagern der relativ dicken Teile aus der Versorgungseinheit notwendig. So ist der Sauerstoffgenerator 19 und die Lichtquelle 20 in einem Gehäuse 18 vorgesehen, welches in der bevorzugten Ausgestaltung am strukturseitigen Ende des Tragarmes 8 angeordnet ist und das Gehäuse 18 so gleichzeitig den Anschlußpunkt an die Versorgungsleitung 6 bildet.
Eine nicht dargestellte, weitere Ausführung besteht darin, daß die verlagerten Teile hinter der Flugzeugverkleidung angeordnet werden und so für die Passagiere nicht mehr sichtbar sind.

Die Lichtquelle 20 erzeugt Licht, welches mit faseroptischen Mitteln, beispielsweise über Lichtleiter, zur den Lichtaustritten der Leseleuchten 9A - 9C übertragen wird.

In Fig. 5 ist der Tragarm 8 als eine Blattfeder ausgebildet, um die notwendige Vorspannung aufzubringen. Um den Tragarm 8 mit den Zuführleitungen 7 ist als schützende Ummantelung ein flexibler Faltenbalg vorgesehen.

In Fig. 6 ist der Tragarm 8 als flaches, starres Profil ausgeführt, in der die Zuführleitungen 7 eingelegt und so für den Passagier nicht sichtbar sind. Die notwendige Vorspannung des Tragarmes 8 wird mit einem federbelasteten Gelenk als Anschlußpunkt des Tragarmes 8 an der Struktur zur Verfügung gestellt. Mittels Rollen 21A und 21B oder ähnlichen Gleitmitteln, wie Filz, kann sich die Versorgungseinheit 5 bei Bewegung der Schale 3 an der Unterseite derselben mit nur einer geringen Reibung bewegen und so Kratzer auf der Oberfläche verhindern.

### Bezugszeichenliste

- 1 -: Flugzeugrumpf
- 1A -: Rumpfstruktur(teil)
- 2 -: Passagierkabine
- 3 -: Gepäckablage (-schale)
- 3' -: " in abgesenkter Position
- 4 -: Passagiersitzreihe
- 5 -: Versorgungseinheit
- 5' -: Versorgungseinheit in abgesenkter Position
- 6 -: Versorgungsleitung
- 7 -: Zuführleitungen in einer Umhüllung
- 8 -: Tragarm
- 8' -: " in abgesenkter Position
- 9A-C -: Leseleuchte
- 10A-C -: Luftdusche
- 11 -: Abdeckung an 5 für Notsauerstoffversorgung
- 12A-C -: Ruftasten
- 13 -: Träger
- 13' -: " in abgesenkter Position
- 14A-C -: Strahler für die Kabinenleuchtung
- 15 -: Bewegung der Gepäckschale 3 (Pfeil)
- 16 -: Drehpunkt
- 17 -: rohrförmiges Gehäuse
- 18 -: Gehäuse
- 19 -: Sauerstoffgenerator
- 20 -: Lichtquelle
- 21A,B -: Rollen

## Patentansprüche

1. Passagierkabine (2) mit einer Anordnung zum Versorgen von Passagieren, insbesondere in einem Flugzeug, aufweisend eine Versorgungseinheit (5) mit Komfort- und Bedienelementen (9A - 9C, 10A, 10B, 12A - 12C) und Zuführleitungen (7) zwischen einer Versorgungsleitung (6) und der Versorgungseinheit (5), wobei die Versorgungseinheit (5) unterhalb einer Gepäckablage (3) angeordnet ist, **dadurch gekennzeichnet, daß** die Versorgungseinheit (5) und die Zuführleitungen (7) an einem nachgiebigen, rückfederbaren Tragarm (8) angeordnet sind und daß der Tragarm (8) an der Kabinenwand bzw. Rumpfstruktur (lA) des Flugzeuges angebracht ist und unterhalb der Gepäckablagen (3) in Richtung Kabinenmitte verläuft, so daß die Versorgungseinheit (5) im Zentralbereich oberhalb der zugeordneten Passagiersitze (4) positioniert ist.

2. Passagierkabine nach Anspruch 1,
**dadurch gekennzeichnet, daß**
der Tragarm (8) in Nähe der Versorgungsleitung (6) an der Kabinenwand bzw. Rumpfstruktur (1A) angebracht ist.

3. Passagierkabine nach Anspruch 1 oder 2,
**dadurch gekennzeichnet, daß**
der Tragarm (8) im wesentlichen als eine Blattfeder ausgebildet ist.

4. Passagierkabine nach Anspruch 1 oder 2,
**dadurch gekennzeichnet, daß**
der Tragarm (8) als ein starres, flaches Profil ausgebildet ist, das mittels eines rückfederbaren Gelenkes (16) an der Kabinenwand bzw. Rumpfstruktur (1A) befestigt ist.

5. Passagierkabine nach Anspruch 4,
**dadurch gekennzeichnet, daß**
das flache Profil u-förmig ausgeführt ist und die Zuführleitungen (7) ins Innere des Profils einlegbar sind.

6. Passagierkabine nach einem der Ansprüche 1 bis 5,
**dadurch gekennzeichnet, daß**
die entlang des Tragarmes (8) verlaufenden Zuführleitungen (7) und gegebenenfalls der Tragarm (8) von einer schützenden Ummantelung umhüllt sind.

7. Passagierkabine nach Anspruch 6,
**dadurch gekennzeichnet, daß**
die schützende Ummantelung als ein flexibles Rohr ausgebildet ist.

8. Passagierkabine nach einem der Ansprüche 1 bis 7,
**dadurch gekennzeichnet, daß**
an der zur Gepäckablage (3) gerichteten Seite der Versorgungseinheit (5) Gleitmittel, wie beispielsweise Rollen (21A, 21B), angeordnet sind.

9. Passagierkabine nach Anspruch 1 oder 2,
**dadurch gekennzeichnet, daß**
der Tragarm (8) als ein langgestreckter, in Richtung Kabinenmitte gerichteter Träger (13) ausgebildet ist, der alle Elemente der Versorgungseinheit (5) und die Zuführleitungen (7) enthält und mittels einem rückfederbaren Gelenk (16) an der Kabinenwand bzw. Rumpfstruktur (1A) befestigt ist.

10. Passagierkabine nach Anspruch 9,
**dadurch gekennzeichnet, daß**
der Träger (13) in einem bestimmten Abstand unterhalb der Gepäckablage (3) angeordnet ist und an der zur Gepäckablage (3) gerichteten Oberseite Strahler für die Deckenbeleuchtung (14A-14C) vorgesehen sind.

11. Passagierkabine nach einem der Ansprüche 1 bis 10,
**dadurch gekennzeichnet, daß**
eine Lichtquelle (20) außerhalb der Versorgungseinheit (5), vorzugsweise in Nähe der Kabinenwand (2), angeordnet ist, und mittels faseroptischer Leitungen mit Lichtaustritten von Leseleuchten (9A - 9C) verbunden ist.

12. Passagierkabine nach einem der Ansprüche 1 bis 11,
**dadurch gekennzeichnet, daß**
ein Sauerstoffgenerator (19) außerhalb der Versorgungseinheit (5), vorzugsweise in Nähe der Kabinenwand, angeordnet ist.

13. Passagierkabine nach Anspruch 12,
**dadurch gekennzeichnet, daß**
ein Gehäuse (17, 18) des Sauerstoffgenerators als Drehpunkt (16) für den Tragarm (8, 13) vorgesehen ist.

## Claims

1. Passenger cabin (2) having an arrangement for providing services to passengers, particularly in an aircraft, comprising a service unit (5) having passenger comfort and control elements (9A - 9C, 10A, 10B, 12A - 12C) and supply lines (7) between a service line (6) and the service unit (5), wherein the service unit (5) is disposed below a luggage compartment (3), **characterized in that** the service unit (5) and the supply lines (7) are disposed on a compliant, resilient bracket (8) and that the bracket (8) is attached to the cabin wall or fuselage structure (1A) of the aircraft and extends below the luggage compartments (3) towards the centre of the cabin so that the service unit (5) is positioned in the central region above the associated passenger seats (4).

2. Passenger cabin according to claim 1,
**characterized in that**
the bracket (8) is attached in the vicinity of the service line (6) to the cabin wall or fuselage structure (1A).

3. Passenger cabin according to claim 1 or 2,
**characterized in that**
the bracket (8) substantially takes the form of a leaf spring.

4. Passenger cabin according to claim 1 or 2,
**characterized in that**
the bracket (8) takes the form of a rigid, flat profile, which is fastened by means of a resilient joint (16) to the cabin wall or fuselage structure (1A).

5. Passenger cabin according to claim 4,
**characterized in that**
the flat profile is U-shaped and the supply lines (7) are insertable into the interior of the profile.

6. Passenger cabin according to one of claims 1 to 5,
**characterized in that**
the supply lines (7), which extend along the bracket (8), and optionally the bracket (8) are enclosed by a protective sheath.

7. Passenger cabin according to claim 6,
**characterized in that**
the protective sheath takes the form of a flexible tube.

8. Passenger cabin according to one of claims 1 to 7,
**characterized in that**
sliding means such as, for example, rollers (21A, 21B) are disposed at the side of the service unit (5) directed towards the luggage compartment (3).

9. Passenger cabin according to claim 1 or 2,
**characterized in that**
the bracket (8) takes the form of an elongate carrier (13) which is directed towards the centre of the cabin, contains all elements of the service unit (5) and the supply lines (7) and is fastened by means of a resilient joint (16) to the cabin wall or fuselage structure (1A).

10. Passenger cabin according to claim 9,
**characterized in that**
the carrier (13) is disposed at a specific distance below the luggage compartment (3) and provided at the top surface directed towards the luggage compartment (3) with reflector lamps (14A-14C) for illuminating the ceiling.

11. Passenger cabin according to one of claims 1 to 10,
**characterized in that**
a light source (20) is disposed outside of the service unit (5), preferably in the vicinity of the cabin wall (2), and connected by fibre-optic lines to light outputs of reading lamps (9A - 9C).

12. Passenger cabin according to one of claims 1 to 11,
**characterized in that**
an oxygen generator (19) is disposed outside of the service unit (5), preferably in the vicinity of the cabin wall.

13. Passenger cabin according to claim 12,
**characterized in that**
a housing (17, 18) of the oxygen generator is provided as pivot (16) for the bracket (8, 13).

## Revendications

1. Cabine de passagers (2) comprenant un agencement pour desservir des passagers, en particulier dans un avion, présentant une unité d'approvisionnement (5) avec des éléments de confort et de service (9A-9C, 10A, 10B, 12A-12C) et des canalisations d'alimentation (7) entre une canalisation d'approvisionnement (6) et l'unité d'approvisionnement (5), l'unité d'approvisionnement (5) étant agencée sous un porte-bagages (3), caractérisée en ce que l'unité d'approvisionnement (5) et les canalisations d'alimentation (7) sont agencées sur un bras de support flexible à rappel (8) et en ce que le bras de support (8) est monté sur la paroi de la cabine ou la structure du fuselage (1A) de l'avion et s'étend en dessous des porte-bagages (3) dans la direction du centre de la cabine, si bien que l'unité d'approvisionnement (5) est positionnée dans la zone centrale au-dessus des sièges de passagers correspondants (4).

2. Cabine de passagers selon la revendication 1, caractérisée en ce que le bras de support (8) est monté au voisinage de la canalisation d'alimentation (6) sur la paroi de la cabine ou la structure du fuselage (1A).

3. Cabine de passagers selon la revendication 1 ou 2, caractérisée en ce que le bras de support (8) se présente en substance sous la forme d'un ressort à lame.

4. Cabine de passagers selon la revendication 1 ou 2, caractérisée en ce que le bras de support (8) se présente sous la forme d'un profilé plat rigide, qui est fixé à la paroi de la cabine ou à la structure du fuselage (1A) au moyen d'une articulation (16) à rappel élastique.

5. Cabine de passagers selon la revendication 4, caractérisée en ce que le profilé plat est conformé en U et les canalisations d'alimentation (7) peuvent être insérées à l'intérieur du profilé.

6. Cabine de passagers selon l'une quelconque des revendications 1 à 5, caractérisée en ce que les canalisations d'alimentation (7) s'étendant le long du bras de support (8) et éventuellement le bras de support (8) sont entourés d'une gaine protectrice.

7. Cabine de passagers selon la revendication 6, caractérisée en ce que la gaine protectrice se présente sous la forme d'un tube flexible.

8. Cabine de passagers selon l'une quelconque des revendications 1 à 7, caractérisée en ce qu'on agence du côté de l'unité d'approvisionnement (5) tourné vers le porte-bagages (3) des moyens coulissants, tels que, par exemple, des cylindres (21A, 21B).

9. Cabine de passagers selon la revendication 1 ou 2, caractérisée en ce que le bras de support (8) se présente sous la forme d'un support longitudinal (13) orienté dans la direction du centre de la cabine, qui contient tous les éléments de l'unité d'approvisionnement (5) et les canalisations d'alimentation (7) et est fixé à la paroi de la cabine ou au contour du fuselage (1A) au moyen d'une articulation (16) à rappel élastique.

10. Cabine de passagers selon la revendication 9, caractérisée en ce que le support (13) est agencé à une certaine distance en dessous du porte-bagages (3) et des lampes sont prévues du côté supérieur tourné vers le porte-bagages pour éclairer le plafond (14A, 14C).

11. Cabine de passagers selon l'une quelconque des revendications 1 à 10, caractérisée en ce qu'une source de lumière (20) est agencée à l'extérieur de l'unité d'approvisionnement (5), de préférence au voisinage de la paroi (2) de la cabine, et est connectée à des sorties lumineuses de lampes de lecture (9A - 9C) au moyen de canalisations à fibres optiques.

12. Cabine de passagers selon l'une quelconque des revendications 1 à 11, caractérisée en ce qu'un générateur d'oxygène (19) est agencé à l'extérieur de l'unité d'approvisionnement (5), de préférence au voisinage de la paroi de la cabine.

13. Cabine de passagers selon la revendication 12, caractérisée en ce qu'un boîtier (17, 18) du générateur d'oxygène est prévu comme pivot (16) pour le bras de support (8, 13).
